(19) Europäisches Patentamt

European Patent Office

Office européen des brevets

(11) EP 0 645 344 B1

(12) EUROPEAN PATENT SPECIFICATION

(45) Date of publication and mention
of the grant of the patent:
29.07.1998 Bulletin 1998/31

(51) Int. Cl.$^6$: C01B 3/38

(21) Application number: 94202702.0

(22) Date of filing: 21.09.1994

(54) **Process for the preparation of carbon monoxide and hydrogen**

Verfahren zur Herstellung von Kohlenmonoxid und Wasserstoff

Procédé pour la préparation du monoxyde de carbon et de l'hydrogène

(84) Designated Contracting States:
AT BE CH DE DK ES FR GB GR IT LI NL PT SE

(30) Priority: 23.09.1993 EP 93202748

(43) Date of publication of application:
29.03.1995 Bulletin 1995/13

(73) Proprietor:
SHELL INTERNATIONALE RESEARCH
MAATSCHAPPIJ B.V.
2596 HR Den Haag (NL)

(72) Inventors:
• Jacobs, Ludovicus Leonardus Gerardus
NL-1031 CM Amsterdam (NL)
• Schoonebeek, Ronald Jan
NL-1031 CM Amsterdam (NL)
• Tijm, Petrus Jacobus Adrianus
NL-1031 CM Amsterdam (NL)
• Vonkeman, Koert Alexander
NL-1031 CM Amsterdam (NL)

(56) References cited:
EP-A- 0 576 096

• JOURNAL OF CATALYSIS, no.138, 1992,
DULUTH, MN US pages 267 - 282 D.A.HICKMAN,
L.D.SCHMIDT 'Synthesis gas formation by direct
oxidation of methane over Pt monoliths'
• CATALYSIS TODAY, vol.13, 1992, AMSTERDAM,
NL pages 417 - 426 P.D.F. VERNON ET AL.
'Partial oxidation of methane to synthesis gas,
and carbon dioxide as an oxidising agent
fomethane conversion'
• NITROGEN, no.187, September 1990, LONDON
GB pages 28 - 29 'Partial oxidation of methane to
synthesis gas'
• Winkler Prins, Technische Encyclopedie, page
252

## Description

The present invention relates to a process for the preparation of carbon monoxide and hydrogen by the partial oxidation of a hydrocarbon feed, in particular of a hydrocarbon feed comprising carbon dioxide.

The partial oxidation of hydrocarbons, for example methane or natural gas, in the presence of a catalyst is an attractive route for the preparation of mixtures of carbon monoxide and hydrogen, known in the art as synthesis gas. The partial oxidation of a hydrocarbon is a highly exothermic reaction and, in the case in which methane is the hydrocarbon, proceeds by the following reaction:

$$2CH_4 + O_2 \rightarrow 2CO + 4H_2$$

Processes for the catalytic partial oxidation of hydrocarbons, such as methane, are known and described in the art. For example, D.A. Hickman and L.D. Schmidt ("Synthesis Gas Formation by Direct Oxidation of Methane over Pt Monoliths", Journal of Catalysis 138, 1992, pages 267 to 282) have conducted experiments into the partial oxidation of methane in the presence of catalysts comprising either platinum or rhodium. The catalysts employed were in the form of a polycrystalline platinum foil or rhodium or platinum supported on a ceramic foam carrier. The partial oxidation reactions were conducted at substantially atmospheric pressure, at temperatures in the range of from 600 to 1500 K (337 to 1237 °C) and using a range of gas flow rates. The experiments used a mixture consisting of methane and oxygen or air as the feed. The experiments achieved a typical methane conversion of 80% with typical selectivities to carbon monoxide and hydrogen of 90% and 50% respectively.

Further, P.D.F. Vernon et al ("Partial Oxidation of Methane to Synthesis Gas, and Carbon Dioxide as an Oxidising Agent for Methane Conversion", Catalysis Today, 13 (1992) 417-426) describe the partial oxidation of methane by oxygen to give synthesis gas using the transition metals nickel, ruthenium, rhodium, palladium, platinum and iridium supported on inert oxides.

Suitable feedstocks for use in the catalytic partial oxidation process, in addition to comprising hydrocarbons such as methane, can also comprise carbon dioxide. Indeed, some natural gas reserves contain carbon dioxide in significant quantities. Accordingly, there is a need for a commercial process for the conversion of the aforementioned hydrocarbon feedstocks comprising carbon dioxide into mixtures of carbon monoxide and hydrogen.

The reforming of hydrocarbons using carbon dioxide is a well known process. The process is endothermic which, in the case of the reforming of methane, proceeds by the following reaction:

$$CH_4 + CO_2 \rightarrow 2CO + 2H_2$$

P.D.F. Vernon et al, in the aforementioned reference describe a range of experiments conducted to examine the reforming of methane using carbon dioxide in the presence of a range of catalysts comprising nickel, palladium, ruthenium, rhodium and iridium supported on an alumina carrier.

Finally, P.D.F. Vernon et al in the same reference propose combining the exothermic partial oxidation reaction with the endothermic carbon dioxide reforming reaction to give a thermo-neutral process. Experiments are described in which a catalyst comprising iridium supported on alumina was used to convert feed mixtures having a range of compositions. A high level of conversion of methane was achieved in the process, accompanied by the formation of both carbon monoxide and hydrogen in reasonable yields. For feed mixtures containing carbon dioxide in a concentration of greater than 20 %, a high level of carbon dioxide conversion was achieved. However, the data given in the reference indicate that at low concentrations of carbon dioxide in the feed mixture, only a very poor level of carbon dioxide conversion is obtainable. It was concluded that excellent yields of synthesis gas could be obtained if feeds containing methane, oxygen and carbon dioxide in approximately stoichiometric amounts are used. No details of the reaction conditions employed in the experiments are given.

International patent application publication No. 92/11199 (WO 92/11199) discloses a process for the conversion of a reactant gas mixture of carbon dioxide, oxygen and methane. The reactant gas is contacted with a catalyst at a temperature of from 600 to 1000 °C to yield a mixture of carbon monoxide and hydrogen. The catalyst is a solid having the general formula $M_xM'_yO_z$ or $M_xO_z$ or $M'_yO_z$ or $M'$ on a suitable support. M in the formulae is at least one metal selected from lithium, sodium, potassium, rubidium, caesium, beryllium, magnesium, calcium, strontium, barium, boron, aluminium, scandium, yttrium, gallium, indium, thallium, bismuth, uranium, thorium, lead and the lanthanides. M' in the formulae is at least one metal selected from titanium, vanadium, chromium, manganese, iron, cobalt, nickel, copper, zinc, gallium, germanium, yttrium, zirconium, niobium, molybdenum, ruthenium, rhodium, palladium, gold, cadmium, indium, tin, hafnium, tantalum, tungsten, rhenium, osmium, iridium, platinum, silver, mercury, tellurium, lead, bismuth, thallium and uranium.

In WO 92/11199 it is stated that a thermally neutral reaction can be achieved when the ratio of carbon dioxide to oxygen in the reactant gas is approximately 1 to 6. In a preferred embodiment, the process is operated with an excess of carbon dioxide in the reactant gas. In this way, the formation of carbon is said to be suppressed, allowing the use of cheaper catalysts. Experiments are described in WO 92/11199 in which a range of catalysts were tested. The experiments were conducted at 0.1 MPa (1 bar) and at temperatures of up to 1050 K (777 °C). Catalysts tested in the conversion of mixtures of methane, carbon dioxide and oxygen only very low levels of conversion of carbon dioxide are achieved when feeds comprising only a minor quantity of carbon dioxide are employed. In addition, data disclosed in WO 92/11199 indicate that the level of hydrocarbon conversion and selectivity to carbon monoxide and hydrogen achieved in the process decline as the space velocity of the gas flowing the catalyst is increased.

To be suitable for application on a commercial scale, a process for the preparation of carbon monoxide and hydrogen from a feed comprising a hydrocarbon and carbon dioxide must be able to achieve a high level of of carbon dioxide conversion. The process must be able to operate at a commercially acceptable rate of gas throughput. Thus, it would seem from the data and information disclosed by P.D.F. Vernon et al and in WO 92/11199 that catalytic partial oxidation is most unsuitable for application in the preparation of carbon monoxide and hydrogen from feeds comprising hydrocarbons and carbon dioxide on a commercial scale.

Surprisingly, contrary to the teaching of the prior art discussed hereinbefore, it has now been found that a feed comprising a mixture of a hydrocarbon, carbon dioxide and an oxygen-containing gas can be converted into a mixture of carbon monoxide and hydrogen by the catalytic partial oxidation of the hydrocarbon in a high yield using very high gas hourly space velocities. Most surprisingly, it has been found that this process allows high levels of carbon dioxide conversion to be achieved when carbon dioxide is present in the feed in only minor quantities.

Accordingly, the present invention provides a process for the preparation of carbon monoxide and hydrogen by the partial oxidation of a hydrocarbon, which process comprises contacting a feed comprising the hydrocarbon, carbon dioxide in a concentration greater than that of air and up to 10 % by volume of the feed and an oxygen-containing gas with a catalyst comprising a metal selected from Group VIII of the Periodic Table of the Elements at a gas hourly space velocity of at least 500,000 Nl/kg/hr.

It is a most surprising aspect of the present invention that the carbon dioxide reforming reactions necessary to convert the carbon dioxide in the feed can be achieved in the very short time in which the feed contacts the catalyst at the very high space velocities prevailing in this process. The use of very high space velocities in the process of the present invention gives rise to a number of significant advantages. Firstly, it is possible to apply gas velocities which exceed the velocity of a flame propagating through the feed mixture. This reduces the risk of explosions occurring during the operation of the process due to ignition of the feed mixture and allows the various components of the feed to be mixed prior to being contacted with the catalyst. Secondly, at such high gas space velocities, the time for which the feed contacts the catalyst is very low. This in turn reduces the risk that complete oxidation of the hydrocarbon in the feed occurs. Complete oxidation would yield carbon dioxide, which would require reforming with the hydrocarbon in order to yield the desired carbon monoxide and hydrogen. Such reforming reactions are endothermic, as discussed above, and are preferably kept to a minimum.

Thus, in contrast to the processes disclosed in the prior art, the process of the present invention is particularly suitable for application on a commercial scale.

The process of the present invention may be used to prepare a mixture of carbon monoxide and hydrogen from any gaseous hydrocarbon or hydrocarbon feedstock having a low boiling point. The process is particularly suitable for the partial oxidation of methane, natural gas, associated gas or other sources of light hydrocarbons. In this respect, the term "light hydrocarbons" is a reference to hydrocarbons having from 1 to 5 carbon atoms. The process may advantageously be applied in the conversion of gas from naturally occurring reserves of methane which contain a substantial amount of carbon dioxide.

The feed comprises an oxygen-containing gas. Air is suitable for use as the oxygen-containing gas. However, the use of substantially pure oxygen as the oxygen-containing gas may be preferred. In this way, the need for handling a large volume of inert gas, for example nitrogen when using air as the oxygen-containing gas, is avoided.

The feed may additionally comprise steam.

The feed to be converted in the process of this invention should contain the hydrocarbon, carbon dioxide and the oxygen-containing gas in sufficient amounts to give a suitable oxygen-to-carbon ratio. For the purposes of this specification, the term "oxygen-to-carbon ratio" is a reference to the ratio of oxygen atoms present in the feed to carbon atoms present in the feed. The oxygen atoms relevant for determining the oxygen-to-carbon ratio are present in the feed in the form of carbon dioxide molecules and as oxygen molecules in the oxygen-containing gas. Carbon atoms will be present in the feed in the form of the hydrocarbon molecules and in the form of carbon dioxide molecules. Preferably, the feed comprises hydrocarbon, carbon dioxide and the oxygen-containing gas in concentrations sufficient to give an oxygen-to-carbon ratio in the range of from 0.6 to 1.6, more preferably, in the range of from 0.9 to 1.5. More preferably the oxygen-to-carbon ratio is in the range of from 0.9 to 1.4, with oxygen-to-carbon ratios in the region of the stoichiometric ratio of 1.0, that is in a range of from 0.9 to 1.3, being especially preferred.

In many applications, the carbon dioxide in the feed will accompany the hydrocarbon being processed. In such cases, the concentration of carbon dioxide in the feed to the process will be determined by the concentration of carbon dioxide in the hydrocarbon source, for example natural gas from a gas reservoir or associated gas from an oil reservoir. The quantity of oxygen-containing gas to be employed in the feed to the process will thus be determined by the concentration of carbon dioxide present in the feed and the desired oxygen-to-carbon ratio.

If steam is present in the feed, the steam-to-carbon ratio is preferably in the range of from above 0.0 to 3.0, more preferably from 0.0 to 2.0.

The hydrocarbon, carbon dioxide, oxygen-containing gas and steam, if present, are preferably well mixed prior to being contacted with the catalyst. As discussed hereinbefore, it is an advantage of the process of this invention that the aforementioned components of the feed may be mixed well upstream of the catalyst, without the risk of a flame or an explosion propagating upstream from the catalyst or other source of ignition.

The process of the present invention may be operated at any suitable pressure. However, the process is preferably operated at elevated pressures, that is pressures significantly above atmospheric pressure. The process may be operated at pressures in the range of up to 150 bara. More preferably, the process is operated at pressures in the range of from 2 to 125 bara, especially from 2 to 100 bara.

The process may be operated at any suitable temperature. However, under the preferred conditions of high pressure prevailing in the process, the feed is preferably contacted with the catalyst at high temperatures in order to obtain the desired degree of conversion. Accordingly, the mixture of the hydrocarbon, carbon dioxide and oxygen-containing gas are preferably contacted with the catalyst at a temperature greater than 800 °C, more preferably a temperature in the range of from 900 to 1400 °C, especially from 1000 to 1300 °C. The feed is preferably preheated prior to being contacted with the catalyst.

The process of the present invention is operated with a gas hourly space velocity (expressed as normal litres of gas per kilogram of catalyst per hour) of at least 500,000 l/kg/hr (STP). STP is used to indicate the volume at standard temperature and pressure, i.e. 0 °C and 1 bar. Preferably, the gas hourly space velocity (STP) is in the range of from 500,000 to 50,000,000 l/kg/hr, more preferably from 750,000 to 30,000,000 l/kg/hr, especially from 1,000,000 l/kg/hr to 20,000,000 l/kg/hr.

The catalyst employed in the process of the present invention comprises a metal selected from Group VIII of the Periodic Table of the Elements. References in this specification to the Periodic Table of the Elements are to the CAS version, as published in the CRC Handbook of Chemistry and Physics, 68th Edition. Preferred catalysts for use in the process comprise a metal selected from ruthenium, rhodium, palladium, osmium, iridium and platinum. Catalysts comprising ruthenium, rhodium or iridium as the catalytically active metal are especially preferred for use in the process.

The catalytically active metal is most suitable supported on a carrier. Suitable carrier materials are well known in the art and include the refractory oxides, such as silica, alumina, titania, zirconia and mixtures thereof. The catalytically active metal may be deposited on the refractory oxide carrier by techniques well known in the art. A most suitable technique for depositing the metal on the carrier is impregnation, which technique typically comprises contacting the carrier material with a solution of a compound of the catalytically active metal, followed by drying and calcining the resulting material.

Any suitable reaction regime may be applied in the process of the present invention in order to contact the reactants with the catalyst. One suitable regime is a fluidised bed, in which the catalyst is employed in the form of particles fluidised by a stream of gas. A preferred reaction regime for use in the process is a fixed bed reaction regime, in which the catalyst is retained within a reaction zone in a fixed arrangement. Particles of catalyst may be employed in the fixed bed regime, retained using fixed bed reaction techniques well known in the art. Alternatively, the catalyst may be in the form of a foam, prepared, for example, by the impregnation of a ceramic foam of the refractory oxide by the catalyst. One suitable regime is a fluidised bed, in which the catalyst is employed in the form of particles fluidised by a stream of gas. A preferred reaction regime for use in the process is a fixed bed reaction regime, in which the catalyst is retained within a reaction zone in a fixed arrangement. Particles of catalyst may be employed in the fixed bed regime, retained using fixed bed reaction techniques well known in the art. Alternatively, the catalyst may be in the form of a foam, prepared, for example, by the impregnation of a ceramic foam of the refractory oxide by the techniques described hereinbefore. Suitable foams for use in the preparation of the catalyst include those having from 30 to 150 pores per inch (12 to 60 pores per centimeter). Further, alternative forms for the catalyst include refractory oxide honeycomb monolith structures.

In a preferred embodiment of the process of this invention, the feed is contacted with a catalyst retained in a fixed arrangement, which arrangement has a high tortuosity. The term "tortuosity" is a common term in the art which, when referring to a fixed catalyst bed, can be defined as the ratio of the length of the path taken by a gas flowing through the bed to the length of the shortest straight line path through the bed. Thus, the honeycomb monolith structures have a tortuosity of 1.0. For the purposes of the present invention, the term "high tortuosity" is a reference to arrangements having a tortuosity substantially greater than that of the honeycomb monolith structures, in particular a tortuosity of at least 1.1. A fixed bed of catalyst particles typically has a tortuosity of 1.5, whilst ceramic foams may be prepared having a tortuosity in the range of from 3.0 to 4.0, or even higher. In general, the tortuosity of the fixed bed arrangement is preferably in the range of from 1.1 to 10.0, more preferably to 5.0. A most suitable range of tortuosity is from 1.3 to 4.0.

4

It has been found that by employing the catalyst in a fixed bed arrangement having a high tortuosity allows the required conversion to be achieved with only a relatively very short contact time between the reacting gases and the catalyst. In this way, only a very low volume of catalyst is required, which in turn allows the very high gas space velocities of the present process to be easily achieved on a commercial scale.

The feed is preferably contacted with the catalyst under adiabatic conditions. For the purposes of this specification, the term "adiabatic" is a reference to reaction conditions in which substantially all heat loss and radiation from the reaction zone is prevented, with the exception of heat leaving in the gaseous effluent stream of the reactor.

In a further aspect, the present invention relates to carbon monoxide and/or hydrogen whenever prepared by a process as hereinbefore described.

The mixture of carbon monoxide and hydrogen prepared by the process of this invention is particularly suitable for use in the synthesis of hydrocarbons, for example by means of the Fischer-Tropsch synthesis, or the synthesis of oxygenates, for example methanol. Processes for the conversion of the mixture of carbon monoxide and hydrogen into such products are well known in the art.

The process of the present invention is further described by way of the following illustrative example.

Example 1

Catalyst Preparation

An aqueous solution was prepared by dissolving rhodium chloride ($RhCl_3$, 2.0 g) and hydrochloric acid (37%, 1.0 g) in demineralised water (6.83 g) to give a rhodium concentration of 10% by weight. Alpha alumina extrudates (commercially available ex. Engelhard, crushed to 30/80 mesh size, 10.0 g) were immersed in the aforementioned solution (5.33 g). The resulting mixture was agitated firstly on a rolling mill for 1 hour and thereafter in a rotary drier for 1 hour. The resulting material was dried in an oven by heating for 1 hour and being held at a temperature of 120 °C for 5 hours and subsequently calcined by heating for 5 hours and being held at a temperature of 500 °C for 1 hour. The resulting catalyst comprised 5.0% by weight rhodium.

Catalytic Partial Oxidation

A reactor was constructed comprising a transparent sapphire tube mounted concentrically within an outer transparent polycarbonate tube. The rhodium-containing catalyst prepared as hereinbefore described was loaded into the sapphire tube and retained in the form of a fixed bed of catalyst particles having a tortuosity of about 1.5. Methane, oxygen and carbon dioxide were thoroughly mixed before being introduced into the reactor to contact the fixed bed of catalyst. The concentration of carbon dioxide in the feed was varied to give a total of four different feed compositions, whilst keeping the operating pressure and gas hourly space velocity (GHSV) of the experiment constant. The composition of the gas mixture leaving the reactor was measured for each of the four feed compositions.

The operating temperature of the catalyst bed was measured by optical pyrometry. The composition of the gas mixture leaving the reactor was measured by gas chromatography. The conversion and the selectivity of the process to carbon monoxide and hydrogen (on the basis of methane converted) was determined. The operating conditions of the reactor and the results of the experiment are summarised in the Table hereinbelow.

From the data presented in the Table, it can be seen that the process of the present invention allows hydrocarbon feeds comprising carbon dioxide to be converted in high yields and with high selectivities to both carbon monoxide and hydrogen. It can be seen that a high level of carbon dioxide conversion is achieved. This in turn results in the significant advantage that less carbon dioxide is present in the product stream of the process, which carbon dioxide would be an undesirable inert component in the further conversion of the carbon monoxide and hydrogen in such processes as the Fischer-Tropsch synthesis.

EP 0 645 344 B1

Table

| Operating Conditions | | | | | |
|---|---|---|---|---|---|
| Temperature (°C) | 1050 | | | | |
| Pressure (bara) | 3.2 | | | | |
| GHSV (1000 l/kg/hr(STP)) | 1700 | | | | |
| Feed Composition | | | | | |
| Oxygen (% vol) | 38.3 | 37.5 | 37.6 | 37.3 | 36.9 |
| Methane (% vol) | 61.7 | 60.9 | 60.5 | 60.2 | 59.6 |
| Carbon Dioxide (% vol) | 0.0 | 1.3 | 1.9 | 2.5 | 3.6 |
| Oxygen-to-Carbon ratio | 1.24 | 1.25 | 1.26 | 1.27 | 1.28 |
| Conversion (%) | | | | | |
| Methane | 96.2 | 96.0 | 95.9 | 95.8 | 95.6 |
| Carbon Dioxide | - | 48.9 | 49.3 | 50.4 | 50.6 |
| Selectivity (%)[1] | | | | | |
| Carbon Monoxide | 92.3 | 91.3 | 90.8 | 90.1 | 89.5 |
| Hydrogen | 92.3 | 91.3 | 90.8 | 90.2 | 89.9 |

[1] Selectivity to carbon monoxide and hydrogen based on methane conversion.

## Claims

1. A process for the preparation of carbon monoxide and hydrogen by the partial oxidation of a hydrocarbon, which process comprises contacting a feed comprising the hydrocarbon, carbon dioxide in a concentration greater than that of air and up to 10 % by volume of the feed and an oxygen-containing gas with a catalyst comprising a metal selected from Group VIII of the Periodic Table of the Elements at a gas hourly space velocity of at least 500,000 l/kg/hr(STP).

2. A process according to claim 1, characterised in that the hydrocarbon is methane or present as natural gas, associated gas, or other source of light hydrocarbons.

3. A process according to any preceding claim, characterised in that the oxygen-containing gas is substantially pure oxygen.

4. A process according to any preceding claim, characterised in that the feed comprises the hydrocarbon, carbon dioxide and the oxygen-containing gas in concentrations sufficient to give an oxygen-to-carbon ratio in the range of from 0.9 to 1.6, preferably from 0.9 to 1.5, more preferably from 0.9 to 1.4, especially from 0.9 to 1.3.

5. A process according to any preceding claim, characterised in that the feed is contacted with the catalyst at a pressure of up to 150 bara, preferably a pressure in the range of from 2 to 125 bara, more preferably from 2 to 100 bara.

6. A process according to any preceding claim, characterized in that the feed is contacted with the catalyst at a temperature greater than 800 °C, preferably at a temperature in the range of from 900 to 1400 °C, more preferably from 1000 to 1300 °C.

7. A process according to any preceding claim, characterised in that the feed is contacted with the catalyst at a gas hourly space velocity (STP) in the range of from 500,000 to 50,000,000 l/kg/hr, preferably from 750,000 to 30,000,000 l/kg/hr, more preferably from 1,000,000 l/kg/hr to 20,000,000 l/kg/hr.

8. A process according to any preceding claim, characterised in that the catalyst comprises a metal selected from ruthenium, rhodium, palladium, osmium, iridium and platinum, preferably a metal selected from ruthenium, rhodium

6

or iridium.

9. A process according to any preceding claim, characterised in that the catalyst is retained in a fixed arrangement.

10. A process according to claim 9, characterised in that the catalyst is retained in a fixed arrangement having a high tortuosity, preferably in the range of from 1.1 to 10.0, more preferably from 1.1 to 5.0, especially from 1.3 to 4.0.

11. A process according to either of claims 9 or 10, characterised in that the catalyst is in the form of particles or a ceramic foam.

12. A process according to any preceding claim, characterised in that the feed is contacted with the catalyst under adiabatic conditions.

**Patentansprüche**

1. Verfahren zur Herstellung von Kohlenmonoxid und Wasserstoff durch partielle Oxidation eines Kohlenwasserstoffes, welches Verfahren ein Inkontaktbringen eines den Kohlenwasserstoff, Kohlendioxid in einer Konzentration größer als jener von Luft und bis zu 10 Vol.-% des Einsatzes und ein sauerstoffhältiges Gas umfassenden Einsatzmaterials mit einem Katalysator umfaßt, der ein aus der Gruppe VIII des Periodensystems der Elemente ausgewähltes Metall umfaßt, bei einer stündlichen Gasraumgeschwindkeit von mindestens 500.000 Nl/kg/h (STP).

2. Verfahren nach Anspruch 1, dadurch gekennzeichnet, daß der Kohlenwasserstoff Methan ist oder als Erdgas, Begleitgas oder als andere Quelle von leichten Kohlenwasserstoffen vorliegt.

3. Verfahren nach einem der vorstehenden Ansprüche, dadurch gekennzeichnet, daß das sauerstoffhältige Gas im wesentlichen reiner Sauerstoff ist.

4. Verfahren nach einem der vorstehenden Ansprüche, dadurch gekennzeichnet, daß das Einsatzmaterial den Kohlenwasserstoff, das Kohlendioxid und das sauerstoffhältige Gas in Konzentrationen umfaßt, die ausreichen, um ein Verhältnis Sauerstoff zu Kohlenstoff im Bereich von 0,9 bis 1,6, vorzugsweise von 0,9 bis 1,5, stärker bevorzugt von 0,9 bis 1,4, im speziellen von 0,9 bis 1,3 zu ergeben.

5. Verfahren nach einem der vorstehenden Ansprüche, dadurch gekennzeichnet, daß das Einsatzmaterial mit dem Katalysator bei einem Druck bis zu 150 bara, vorzugsweise einem Druck im Bereich von 2 bis 125 bara, stärker bevorzugt von 2 bis 100 bara in Kontakt gebracht wird.

6. Verfahren nach einem der vorstehenden Ansprüche, dadurch gekennzeichnet, daß das Einsatzmaterial mit dem Katalysator bei einer Temperatur größer als 800°C, vorzugsweise einer Temperatur im Bereich von 900 bis 1400°C, stärker bevorzugt von 1000 bis 1300°C in Kontakt gebracht wird.

7. Verfahren nach einem der vorstehenden Ansprüche, dadurch gekennzeichnet, daß das Einsatzmaterial mit dem Katalysator bei einer stündlichen Gasraumgeschwindigkeit (STP) im Bereich von 500.000 bis 50,000.000 l/kg/h, vorzugsweise von 750.000 bis 30,000.000 l/kg/h, stärker bevorzugt von 1,000.000 l/kg/h bis 20,000.000 l/kg/h in Kontakt gebracht wird.

8. Verfahren nach einem der vorstehenden Ansprüche, dadurch gekennzeichnet, daß der Katalysator ein aus Ruthenium, Rhodium, Palladium, Osmium, Iridium und Platin ausgewähltes Metall, vorzugsweise ein aus Ruthenium, Rhodium oder Iridium ausgewähltes Metall, umfaßt.

9. Verfahren nach einem der vorstehenden Ansprüche, dadurch gekennzeichnet, daß der Katalysator in einer starren Anordnung gehalten wird.

10. Verfahren nach Anspruch 9, dadurch gekennzeichnet, daß der Katalysator in einer starren Anordnung mit einer hohen Tortuosität, vorzugsweise im Bereich von 1,1 bis 10,0, stärker bevorzugt von 1,1 bis 5,0, im speziellen von 1,3 bis 4,0 gehalten wird.

11. Verfahren nach einem der Ansprüche 9 oder 10, dadurch gekennzeichnet, daß der Katalysator in Form von Teilchen oder als ein keramischer Schaum vorliegt.

**12.** Verfahren nach einem der vorstehenden Ansprüche, dadurch gekennzeichnet, daß das Einsatzmaterial unter adiabatischen Bedingungen mit dem Katalysator in Kontakt gebracht wird.


**Revendications**

**1.** Procédé de préparation du monoxyde de carbone et de l'hydrogène par l'oxydation partielle d'un hydrocarbure, lequel procédé comprend la mise en contact d'une charge comprenant l'hydrocarbure, du dioxyde de carbone en une concentration supérieure à celle de l'air et atteignant jusqu'à 10% en volume de la charge et d'un gaz contenant de l'oxygène avec un catalyseur comprenant un métal choisi parmi les métaux du groupe VIII du tableau périodique des éléments à une vitesse spatiale horaire gazeuse d'au moins 500.000 litres normaux/kg/h.

**2.** Procédé suivant la revendication 1, caractérisé en ce que l'hydrocarbure est le méthane ou est présent sous forme de gaz naturel, de gaz associé ou de toute autre source d'hydrocarbures légers.

**3.** Procédé suivant l'une quelconque des revendications précédentes, caractérisé en ce que le gaz contenant de l'oxygène est de l'oxygène sensiblement pur.

**4.** Procédé suivant l'une quelconque des revendications précédentes, caractérisé en ce que la charge comprend l'hydrocarbure, le dioxyde de carbone et le gaz contenant de l'oxygène, en concentrations qui suffisent à donner un rapport oxygène à carbone qui varie de 0,9 à 1,6, de préférence, de 0,9 à 1,5, plus avantageusement, de 0,9 à 1,4 et, bien mieux encore, de 0,9 à 1,3.

**5.** Procédé suivant l'une quelconque des revendications précédentes, caractérisé en ce que l'on met la charge en contact avec le catalyseur à une pression qui s'élève jusqu'à 150 bara, de préférence, à une pression qui varie de 2 à 125 bara, plus avantageusement, de 2 à 100 bara.

**6.** Procédé suivant l'une quelconque des revendications précédentes, caractérisé en ce que l'on met la charge en contact avec le catalyseur à une température supérieure à 800°C, de préférence, à une température qui varie de 900 à 1400°C, plus avantageusement, de 1000 à 1300°C.

**7.** Procédé suivant l'une quelconque des revendications précédentes, caractérisé en ce que l'on met la charge en contact avec le catalyseur à une vitesse spatiale horaire gazeuse (TPN) qui varie de 500.000 à 50.000.000 l/kg/h, de préférence, de 750.000 à 30.000.000 l/kg/h, plus avantageusement, de 1.000.000 l/kg/h à 20.000.000 l/kg/h.

**8.** Procédé suivant l'une quelconque des revendications précédentes, caractérisé en ce que le catalyseur comprend un métal choisi parmi le ruthénium, le rhodium, le palladium, l'osmium, l'iridium et le platine, de préférence, un métal choisi parmi le ruthénium, le rhodium et l'iridium.

**9.** Procédé suivant l'une quelconque des revendications précédentes, caractérisé en ce que le catalyseur est retenu selon un agencement fixe.

**10.** Procédé suivant la revendication 9, caractérisé en ce que le catalyseur est retenu selon un agencement fixe possédant une tortuosité élevée, de préférence, dans la plage de 1,1 à 10,0, plus avantageusement, de 1,1 à 5,0, bien mieux encore, 1,3 à 4,0.

**11.** Procédé suivant l'une quelconque des revendications 9 et 10, caractérisé en ce que le catalyseur se présente sous la forme de particules ou d'une mousse céramique.

**12.** Procédé suivant l'une quelconque des revendications précédentes, caractérisé en ce que l'on met la charge en contact avec le catalyseur dans des conditions adiabatiques.